# EUROPEAN PATENT SPECIFICATION

(11) **EP 2 934 063 B1**
(45) Date of publication and mention of the grant of the patent: **02.08.2017**
(21) Application number: 13863178.3
(22) Date of filing: 25.09.2013
(51) Int. Cl.: H04W 88/16

(54) **SIGNALLING INITIATING METHOD, APPARATUS AND GATEWAY DEVICE**
SIGNALISIERUNGSINITIIERUNGSVERFAHREN, VORRICHTUNG UND GATEWAY-VORRICHTUNG
PROCÉDÉ D'INITIATION DE SIGNALISATION, APPAREIL ET DISPOSITIF PASSERELLE

(30) Priority: 11.12.2012 CN 201210531553
(43) Date of publication of application: 21.10.2015
(73) Proprietor: ZTE Corporation, Shenzhen, Guangdong 518057 (CN)
(72) Inventor: HAN, Xiangguo, Shenzhen Guangdong 518057 (CN)
(74) Representative: J A Kemp
(86) International application number: PCT/CN2013/084227
(87) International publication number: WO 2014/090011

(56) References cited:
- EP-A1- 2 104 278
- CN-A- 101 355 811
- CN-A- 101 500 340
- CN-A- 101 567 832
- ZTE: "Updates to Network Providing Location Information Procedures", 3GPP DRAFT; S2-121347 NETLOC_UPDATES TO 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bratislava , Slovakia; 20120416 - 20120420, 11 April 2012 (2012-04-11), XP050631870, [retrieved on 2012-04-11]
- ZTE: "Cleanup for the removal of HSS notification during PDN connection release in Non- 3GPP access network", 3GPP DRAFT; S2-120339_REV1-S2-120148_REV1-HSS INTERACTION DURING PDN DISCONNECTION-R11, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20120112 - 20120118, 24 January 2012 (2012-01-24), XP050576208, [retrieved on 2012-01-24]

## Description

### TECHNICAL FIELD

An embodiment of the disclosure relates to a communication field, and particularly relates to a signaling initiation method and apparatus, and a gateway device.

### BACKGROUND

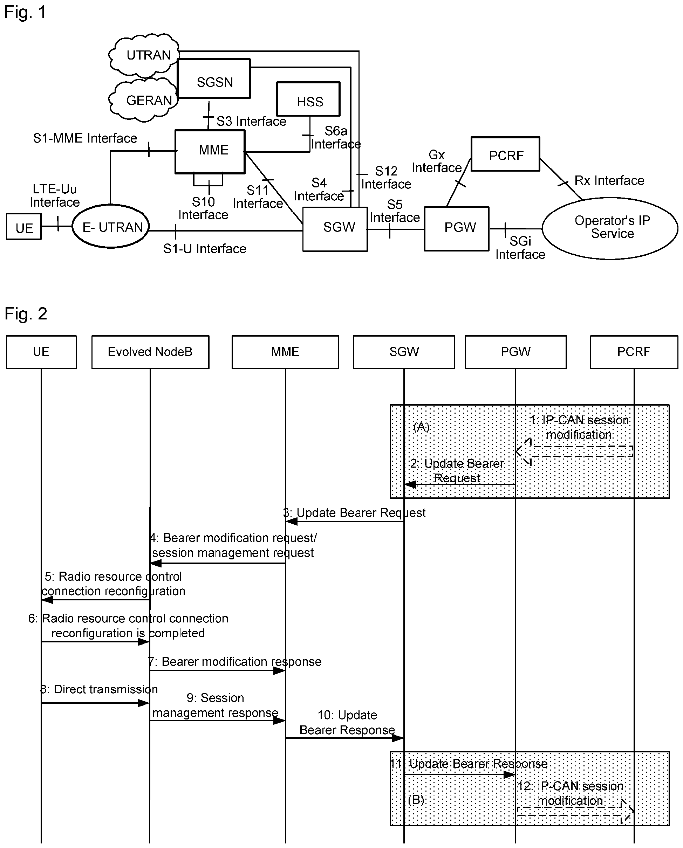

Fig. 1 is a core network architectural view of an Evolved Packet Core (EPC). With reference to Fig. 1, in an entire mobile network, a Packet Data Network (PDN) Gateway (PGW) is located at a terminal point of the mobile network, and a main function of the PGW is shown in the following:
a user message filtering and forwarding function: forwarding a message through different bearers according to a filter equipped for a user;
a lawful interception function;
a function of allocating an IP address for the user: providing an address used for accessing a PDN network resource;
a user charging function: performing charging according to a time length and flow of the user;
a user service level control function: service control levels of different users are different, and this function provides different service levels for different users;
a DHCP server/client function: the PGW may implement a DHCP server and client function.

Seen from evolution of a 3GPP network architecture, in an EPC network, most part of control right is transferred into a PGW network element. For example, a user and a forward network element (e.g., a Serving Gateway (SGW) and a Mobility Management Entity (MME)) cannot initiate creation, modification, and deletion of a specific bearer, any operation must be notified to the PGW through a Command message, and an operation of the specific bearer is initiated by the PGW.

In addition, an application of a Policy and Charging Rule Function (PCRF) is specifically emphasized in an EPC network, a relating strategy of the user, such as a charging method and a user level, may be sent and controlled by the PCRF, all changes initiated by the PCRF will trigger the PGW to initiate a creation, modification, or deletion operation of the specific bearer.

Fig. 2 illustrates a specific bearer modification process triggered by the PCRF. With reference to Fig. 2, the specific bearer modification process triggered by the PCRF is shown in the following:
In Step 1, a PCRF sends an IP-Connectivity Access Network (IP-CAN) Session Modification message to a PGW;
In Step 2, the PGW obtains a bearer processing relating rule according to the received IP-CAN Session Modification message, determines that it is needed to perform Quality of Service (QoS) parameter update on a certain bearer(s) according to the bearer processing relating rule, and sends an Update Bearer Request message to the SGW to notifying the SGW of updating of a QoS parameter of the bearer(s);
In Step 3, the SGW forwards the message to an MME after receiving the message;
In Steps 4-10, in these steps, mainly the MME notifies an eNodeB to perform QoS parameter update, and the eNodeB detects whether its resource can meet a requirement or not, if the resource can meet the requirement, then a response is successful; if the eNodeB determines that its resource is inadequate, then the eNodeB refuses this update;
In Step 11, the SGW forwards an Update Bearer Response message sent by the MME to the PGW;
In Step 12, after receiving the Update Bearer Response message, the PGW detects an execution result, and determines which kind of strategy may be applied locally according to the execution result, for example, the latest QoS parameter is applied. After processing is completed, the PGW sends a response message to the PCRF to notify the PCRF of the execution result.

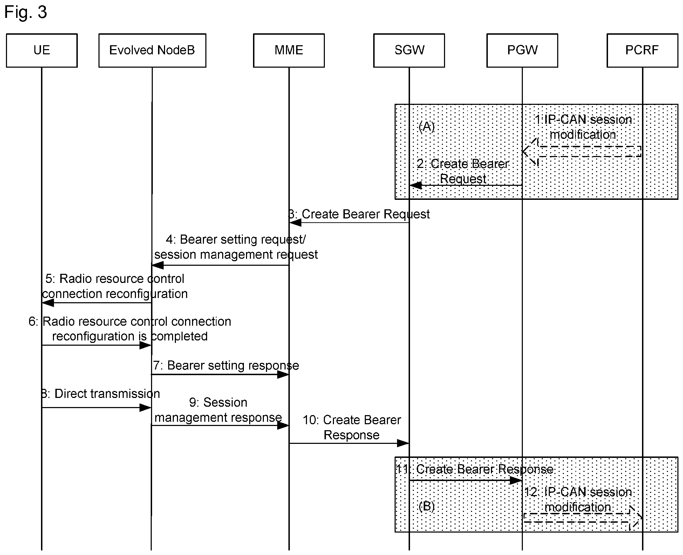

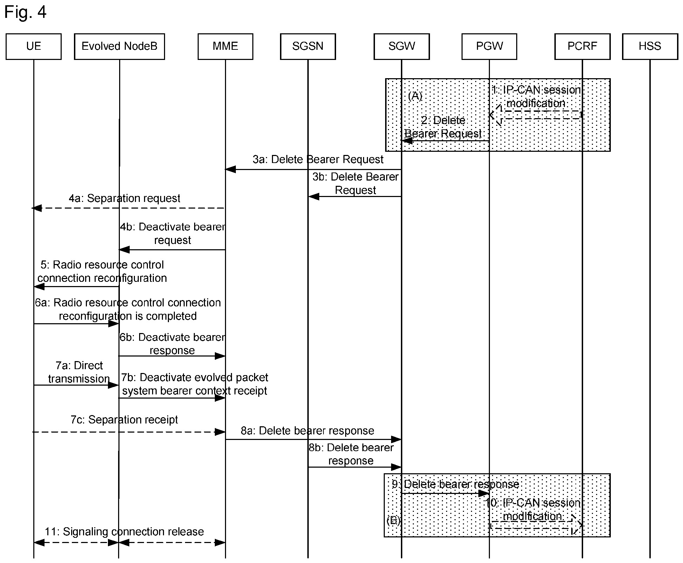

The above description is a standard bearer modification process triggered by the PCRF. A bearer creation process and a bearer deletion process triggered by the PCRF are similar to the bearer modification process, referring to Fig. 3 and Fig. 4, which will not be detailed here.

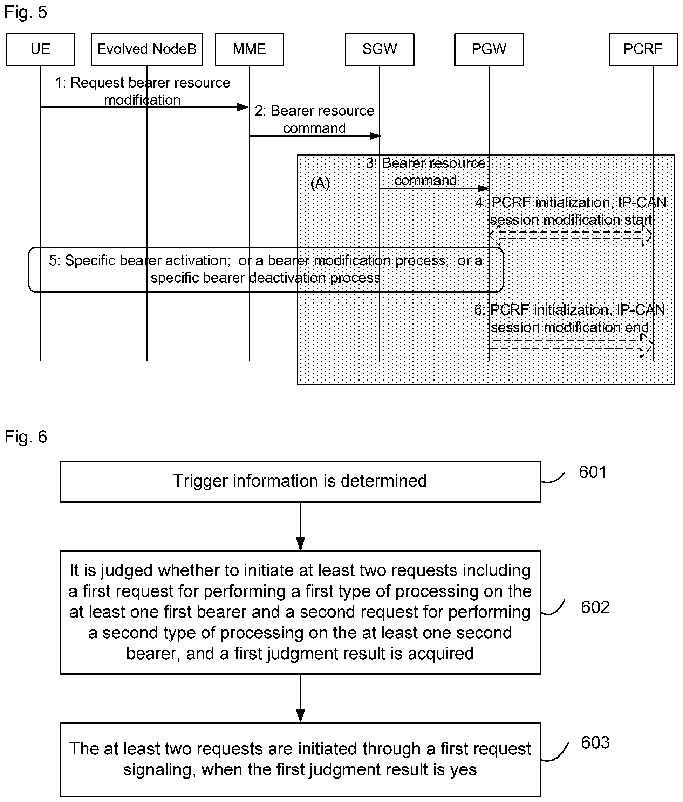

Fig. 5 illustrates that a UE triggers a bearer resource request command. With reference to Fig. 5, a specific bearer creation, modification, deletion process triggered by the user is shown in the following:
In Step 1, a UE initiates update of a specific bearer parameter (such as QoS and Traffic Flow Template (TFT) parameter change), and sends a Request Bearer Resource Modification message to an MME;
In Steps 2-3, the MME and the SGW forward parameter change information in the Request Bearer Resource Modification message from the UE to the PGW through a Bearer Resource Command message;
In Step 4, the PGW determines to initiate the bearer creation, modification or deletion process according to a parameter included in the received Bearer Resource Command message. With regard to the PGW, a specific operation is the same as triggering a bearer operation by the PCRF.

In a certain situations, the PGW may determine to initiate more than one type of bearer processing request according to the IP-CAN Session Modification message from the PCRF or the parameter change information from the UE. The following PGW application scene is taken as an example.

A total bandwidth signed by a user on the PCRF is 6 Megabit per second (Mbps), and 3 specific bearers may be established:
Bearer 1 is used for IP Multimedia Subsystem IMS voice, and a 2Mbps bandwidth is reserved;
Bearer 2 is used for a normal Internet service, and a 2Mbps bandwidth is reserved; and
Bearer 3 is used for a streaming media service, and a 4Mbps bandwidth is reserved.

The user normally accesses the Internet and performs the streaming media service after the user is online, so Bearer 2 and Bearer 3 are established; if the user suddenly needs to perform an IMS voice service, the PGW notifies the PCRF after detecting the service; the PCRF prepares to trigger creation of Bearer 1 but recognizes that the current Bearer 2 and Bearer 3 have occupied a 6Mbps bandwidth, in order to initiate creation of Bearer1, an established bearer must be deleted, or a bandwidth of one bearer must be reduced.

The PCRF decides to delete Bearer 2 and then create Bearer 1. The PCRF may send a processing relating rule of two bearers to the PGW through a message. The PGW detects that deletion and creation are needed. Since a Create Bearer Request message can only include a bearer to be created and a Delete Bearer Request message can only include the bearer to be deleted, the PGW needs to initiate deletion of Bearer 2 first, and then initiate creation of Bearer 1. Therefore, the PGW needs to interact with a forward network element twice to complete the entire process, which results in a signaling processing load of the PGW.

In the reference document "ZTE: 'Updates to Network Providing Location Information Procedures', 3GPP DRAFT; S2-121347 NETLOC_UPDATES TO 23.401, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. Bratislava, Slovakia; 20120416-20120420, 11 April 2012 (2012-04-11), [retrieved on 2012-04-11]", it discloses that: in a dedicated bearer activation procedure, the PDN GW uses QoS policy to assign the EPS Bearer QoS, i.e., it assigns the values to the bearer level QoS parameters QCI, ARP, GBR and MBR; the PGW generates a Charging Id for the dedicated bearer. The PDN GW sends a Create Bearer Request message (IMSI, PTI, EPS Bearer QoS, TFT, S5/S8 TEID, Charging Id, LBI, Protocol Condiguration Options) to the Serving GW, the Linked EPS Bearer Identity (LBI) is the EPS Bearer Identity of the default bearer. The Procedure Transaction Id (PTI) parameter is only used when the procedure was initiated by a UE Requested Bearer Resource Modification Procedure. Protocol Configuration Options may be used to transder application level parameters between the UE and the PDN GW, and are sent transparently through the MME and the Serving GW; in a bearer deactivation procedure, the PDN GW sends a Delete Bearer Request (PTI, EPS Bearer Identity, Causes) message to the Serving GW. The Procedure Transaction Id (PTI) parameter in this step and in the following steps is only used when the procedure was initiated by a UE Requested Bearer Resource Modification Procedure. This message may include an indication that all bearers belonging to that PDN connection shall be released. The PDN GW includes 'Cause' IE in the Delete Bearer Request message and sets the IE to 'RAT changed from 3GPP to Non-3GPP' if the Delete Bearer Request message is caused by a handover from 3GPP to non-3GPP. Furthermore, the reference document "ZTE: "Cleanup for the removal of HSS notification during PDN connection release in Non- 3GPP access network", 3GPP DRAFT; S2-120339_REV1-S2-120148_REV1-HSS INTERACTION DURING PDN DISCONNECTION-R11, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20120112 - 20120118,[retrieved on 2012-01-24]" discloses a PDN GW initiated resource allocation deactivation with GTP on S2b, wherein a procedure can be used to deactivate a dedicated bearer or deactivate all bearers belonging to a PDN address.

### SUMMARY

In view of this, embodiments of the disclosure provide a signaling initiation method and apparatus, and a gateway device, which may reduce a signaling processing load of the gateway device.

In order to solve the above technical problem, the embodiment of the disclosure provides the following solutions.

An embodiment of the disclosure provides a signaling initiation method, which is used for a gateway device. The method may include:
determining trigger information, which is related to at least one first bearer and at least one second bearer;
judging, according to the trigger information, whether to initiate at least two requests including a first request for performing a first type of processing on the at least one first bearer and a second request for performing a second type of processing on the at least one second bearer, and acquiring a first judgment result; and
initiating the at least two requests through a first request signaling when the first judgment result is yes;
wherein the first type is creation, modification, or deletion; the second type is creation, modification, or deletion, and the second type is different from the first type.

Preferably, the determining the trigger information may include:
receiving the trigger information from a PCRF entity or User Equipment (UE).

Preferably, the at least two requests may further include a third request for performing a third type of processing on at least one third bearer.

Preferably, the first type is creation, the second type is modification and the third type is deletion.

Preferably, the first request signaling is an extension signaling after extending a second request signaling which supports initiation of the first request.

Preferably, the method may further include:
receiving a response signaling for the first request signaling, which includes first response information for the first request;
judging whether or not the response signal includes second response information for the second request, and acquiring a second judgment result;
processing the first response information according to the first type and processing the second response information according to the second type, when the second judgment result is yes; and
processing the first response information according to the first type, when the second judgment result is no.

An embodiment of the disclosure further provides a signaling initiation apparatus, used in a getaway device, and the apparatus may include:
a determination module configured to determine trigger information, which is related to at least one first bearer and at least one second bearer;
a judgment module configured to judge, according to the trigger information, whether to initiate at least two requests including a first request for performing a first type of processing on the at least one first bearer and a second request for performing a second type of processing on the at least one second bearer, and acquire a first judgment result; and
an initiation module configured to initiate the at least two requests through one first request signaling when the first judgment result is yes
wherein the first type is creation, modification, or deletion; the second type is creation, modification, or deletion, and the second type is different from the first type.

Preferably, the determination module may include:
a first receiving module configured to receive the trigger information from a PCRF or a UE.

Preferably, the first request signaling is an extension signaling after extending a second request signaling which supports initiation of the first request.

Preferably, the device may further include:
a second receiving module configured to receive a response signaling for the first request signaling, which includes first response information for the first request;
a judgment unit configured to judge whether or not the response signaling includes second response information for the second request, and acquiring a second judgment result;
a first processing unit configured to process the first response information according to the first type and process the second response information according to the second type, when the second judgment result is yes; and
a second processing unit configured to process the first response information according to the first type, when the second judgment result is no.

The embodiment of the disclosure further provides a gateway device, which may include the signaling initiation apparatus described above.

It can be seen from the above description that the disclosure of the embodiment at least has the following advantages:
Different bearer processing requests are initiated through one first request signaling, the gateway device therefore only needs to interact with a forward network element once, which reduces the signaling processing load of the gateway device.

### BRIEF DESCRIPTION OF THE DRAWINGS

Fig. 1 is an EPC network architectural view of the prior art;
Fig. 2 is a view of a specific bearer modification process triggered by a PCRF of the prior art;
Fig. 3 is a view of a specific bearer creation process triggered by the PCRF of the prior art;
Fig. 4 is a view of a specific deletion process triggered by the PCRF of the prior art;
Fig. 5 is a view showing a UE triggers a bearer resource request command of the prior art;
Fig. 6 is a flowchart of a signaling initiation method provided by an embodiment of the disclosure;
Fig. 7 is a view of a specific bearer modification and deletion process triggered by the PCRF through one message in a preferred Embodiment 1 of the disclosure; and
Fig. 8 is a view of a specific bearer creation and deletion process triggered by the PCRF through one message in a preferred Embodiment 2 of the disclosure.

### List of abbreviations

- MME: Mobility Management Entity
- UTRAN: Universal Terrestrial Radio Access Network
- E-UTRAN: Evolved Universal Terrestrial Radio Access Network
- GERAN: GSM EDGE Radio Access Network, GSM, EDGE
- UE: User Equipment
- SGSN: Serving GPRS Support Node, GPRS
- HSS: Home Subscriber Server
- PCRF: Policy and charging rule function

### Operator's IP Services

- IMS: IP Multimedia Subsystem

### DETAILED DESCRIPTION

In order to make a purpose, a technical solution and an advantage of an embodiment of the disclosure more clear, embodiments of the disclosure will be described in detail below in combination with accompanied drawings and specific embodiments.

Fig. 6 is a flowchart of a signaling initiation method provided by an embodiment of the disclosure, and with reference to Fig. 6, the signaling initiation method includes the following steps:
In Step 601, trigger information is determined, which is related to at least one first bearer and at least one second bearer;
In Step 602, it is judged, according to the trigger information, whether to initiate at least two requests including a first request for performing a first type of processing on the at least one first bearer and a second request for performing a second type of processing on the at least one second bearer, according to the trigger information, and a first judgment result is acquired; and
In Step 603, the at least two requests are initiated through a first request signaling, when the first judgment result is yes.

This signal initiation method may be used for a gateway device.

It can be seen that different bearer processing requests are initiated through a first request signaling, so that the gateway device only needs to interact with a forward network element once, so as to reduce a signaling processing load of the gateway device.

In an embodiment of the disclosure, the gateway device may be a PGW.

The PGW, as a terminal point of a mobile network, needs to process a signaling message of a user in an entire mobile network, and provide a data forward service for the user. Seen from a practical application perspective, a capacity of one PGW may usually reach to a user amount from one hundred thousand to a million. When each user generates one signaling, with regard to the PGW, the amount will be from one hundred thousand to a million. If each user generates more signaling, the amount of the signaling to be processed by the PGW may be larger. While a processing ability of the PGW is limited, such a large quantity of data cannot be dealt with at a peak time. Therefore, it is very important to reduce the signaling processing load of the PGW.

In an embodiment of the disclosure, a type of the bearer may be a specific bearer or a default bearer in an EPC.

The trigger information may be generated by the PGW according to a local configuration or according to service relating information from an Online Charging System (OCS); or, the trigger information may be from a PCRF or a UE.
the determining the trigger information includes:
receiving the trigger information from a PCRF or a UE.

Specifically, with regard to a case that the trigger information is from the PCRF, the trigger information may be an IP-CAN Session Modification message sent by the PCRF, which includes a rule relating to the at least one first bearer and the at least one second bearer. With regard to a case that the trigger information is from the UE, the trigger information may be trigger content such as parameter change information relating to the at least one first bearer and the at least one second bearer in the Request Bearer Resource Modification message, and may be forwarded to the PGW by the MME through a Bearer Resource Command message via an SGW.

In addition, the trigger information may be from multiple devices, for example:
the trigger information may include first trigger information relating to at least one first bearer and second trigger information relating to at least one second bearer. The first trigger information and the second trigger information may be separately from the UE and the PCRF, or separately from the PCRF and the UE.

The type here refers to a processing type for a bearer. When the amount of the bearers included by the at least one first bearer is greater than 1, the processing types corresponding to different bearers of the at least one first bearer are the same, but it is not limited whether specific processing on different bearers is the same or not. For example, when the processing type corresponding to the at least one first bearer is creation, the QoS parameters corresponding to different bearers of the at least one first bearer may be the same or may not be the same. When the processing type corresponding to the at least one first bearer is modification, the updated QoS parameters corresponding to different bearers of the at least one first bearer may be the same or may not be the same. Similarly, when the amount of the bearers included by the at least one second bearer is greater than 1, the processing types corresponding to different bearers of the at least one second bearer are the same, but it is not limited whether specific processing on different bearers is the same or not.

It is mentioned above that trigger information may include: first trigger information relating to at least one first bearer and second trigger information relating to at least one second bearer. When the amount of the bearers included by at least one first bearer is greater than 1, in the first trigger information, the trigger information corresponding to some bearers of the at least one first bearer and the trigger information corresponding to remaining bearers of the at least one first bearer may separately be from the UE of the PCRF, or may separately be from the PCRF and the UE. When the amount of the bearers included by at least one second bearer is greater than 1, in the second trigger information, the trigger information corresponding to some bearers of the at least one second bearer or the trigger information corresponding to remaining bearers of the at least one second bearer may separately be from the UE of the PCRF, or may separately be from the PCRF and the UE.

In the embodiment of the disclosure, the first type may be creation, modification, or deletion; the second type may also be creation, modification, or deletion, but is different from the first type.

In the embodiment of the disclosure, further, the at least two requests may further include a third request for performing a third type of processing on at least one third bearer.

The first type may be creation, the second type may be modification, and the third type may be deletion.

In the embodiment of the disclosure, the first request signaling may be an extension signaling after extending the second request signaling supporting initiation of the first request, for example, an extended Create Bearer Request message, an extended Update Bearer Request message, or an extended Delete Bearer Request message.

Considering the situation that the at least two requests includes the first request and the second request, when the first type is creation and the second type is modification, the extended Create Bearer Request message may be obtained by adding a modified bearer context Information Element (IE) in a Create Bearer Request message of the prior art. Information needed for initiating the first request and information needed for initiating the second request may be separately included in the bearer context IE included in the Create Bearer Request message itself of the prior art and in the modified bearer context IE. The modified bearer context IE may be added into any position in the Create Bearer Request message of the prior art, for example, between any two adjacent IEs, before the first IE, or behind the last IE.

When the first type is creation and the second type is deletion, this extended Create Bearer Request message may be obtained by adding a deleted bearer context IE in the Create Bearer Request message of the prior art. The information needed for initiating the first request and the information needed for initiating the second request may be separately included in the bearer context IE included in the Create Bearer Request message itself of the prior art and in the deleted bearer context IE. The deleted bearer context IE may be added into any position in the Create Bearer Request message of the prior art.

When the first type is modification and the second type is deletion, this extended Update Bearer Request message may be obtained by adding a deleted bearer context IE in the Update Bearer Request message of the prior art. The information needed for initiating the first request and the information needed for initiating the second request may be separately included in the bearer context IE included by the Update Bearer Request message itself of the prior art and in this deleted bearer context IE. The deleted bearer context IE may be added into any position in the Update Bearer Request message of the prior art.

However, considering the situation that the at least two requests further includes the third request, the extended Create Bearer Request may be obtained by adding the modified bearer context IE and the deleted bearer context IE in the Create Bearer Request message of the prior art. The information needed for initiation the first request, the information for initiating the second request and the information for initiating the third request may separately be included in the bearer context IE included by the Create Bearer Request message itself of the prior art, in the modified bearer context IE, and in the deleted bearer context IE. The modified bearer context IE and the deleted bearer context IE may be added into any position in the Create Bearer Request message of the prior art, and there is no requirement for a sequence of these two IEs in the extended Create Bearer Request message.

It should be noted that only several typical examples of an extended message are listed here, and a basic principle thereof is to use an existing IE in a message of the prior art to bear a processing request of which a type accords with a bearer processing type corresponding to this message, while the processing request of which the type does not accord with the bearer processing type corresponding to this message is born by a new IE added in the message. In this way, these skilled in the art may directly obtain other ways of performing message extension based on the Create Bearer Request message, the Update Bearer Request message and the Delete Bearer Request message of the prior art, to support initiation of the at least two requests through one first request signaling. These other ways may also be within a scope of the embodiment of the disclosure, will not be detailed here.

Further, in project implementation, considering that a network device to which the processing request is initiated may not support the first request signaling, the method may further include:
receiving a response signaling for the first request signaling; the response signaling includes first response information for the first request;
judging whether the response signal includes second response information for the second request or not, and acquiring a second judgment result;
processing the first response information according to the first type and processing the second response information according to the second type, when the second judgment result is yes; and
processing the first response information according to the first type, when the second judgment result is no.

Specifically, the response signaling may be an existing signaling supporting the first type, for example, a Create Bearer Response message of the prior art, an Update Bearer Response message of the prior art, or a Delete Bearer Response message of the prior art; or may be an extension signaling extended based on this existing signaling, for example, an extended Create Bearer Response message, an extended Update Bearer Response message, or an extended Delete Bearer Response message. Then, when the response signaling is the extension signaling, the second judgment result is yes; when the response signaling is the existing signaling, the second judgment result is no.

More specifically, corresponding to above description of the first request signaling, several examples of the extended Create Bearer Response message and the extended Update Bearer Response message are listed below:
when the first type is creation and the second type is modification, the extended Create Bearer Request message may be obtained by adding a modified bearer context IE in a Create Bearer Request message of the prior art. The first response information and the second response information may be separately included in the bearer context IE included by the Create Bearer Request message itself of the prior art and in the modified bearer context IE. The modified bearer context IE may be added into any position in the Create Bearer Request message of the prior art, for example, between any two adjacent IEs, before the first IE, or behind the last IE.

When the first type is creation and the second type is deletion, the extended Create Bearer Request message may be obtained by adding a bearer context IE marked as deletion in the Create Bearer Request message of the prior art. The first response information and the second response information may be separately included in the bearer context IE included in the Create Bearer Request message itself of the prior art and in the bearer context IE marked as deletion, and the bearer context IE marked as deletion may be added into any position in the Create Bearer Request message of the prior art.

When the first type is modification and the second type is deletion, the extended Update Bearer Request message may be obtained by adding a bearer context IE marked as deletion in the Update Bearer Request message of the prior art. The first response information and the second response information may be separately included in the bearer context IE included in the Update Bearer Request message itself of the prior art and in the bearer context IE marked as deletion. The bearer context IE marked as deletion may be added into any position in the Update Bearer Request message of the prior art.

When the at least two requests may further include the third request, and the first type is creation, the second type is modification, and the third type is deletion, the extended Create Bearer Request may also be obtained by adding the modified bearer context IE and the bearer context IE marked as deletion in the Create Bearer Request message of the prior art. The modified bearer context IE and the bearer context IE marked as deletion may be added into any position in the Create Bearer Request message of the prior art. There is no requirement for a sequence of these two IEs in the extended Create Bearer Request message.

It should be noted that only several typical examples of the extended message are listed here, and the basic principle thereof is to use an existing IE in a message of the prior art to bear response information for a processing request of which a type accords with a bearer processing type corresponding to the message, while the response information for the processing request of which the type does not accord with the bearer processing type corresponding to the message is born by adding a new IE in the message. In this way, these skilled in the art may directly obtain other ways of performing message extension based on the Create Bearer Request message, the Update Bearer Request message and the Delete Bearer Request message of the prior art, to support response of the first request signaling through one response signaling. These other ways may also be within a scope of the embodiment of the disclosure, will not be detailed here.

In the embodiment of the disclosure, when the at least two requests further include a third request, and when the first type is creation, the second type is modification and the third type is deletion, the above "judging whether or not the response signaling includes a second response information for the second request" may be substituted with "judging whether or not the response signaling includes a second respond information for the second request and a third response information for the third request", then the first response information, the second response information, and the third response information may be separately included in the bearer context IE included by the Create Bearer Response message itself of the prior art, in the modified bearer context IE, and in the bearer context IE marked as deletion.

In order to describe the extended message more clearly and explicitly, several examples of the extended message are provided below.

Table 1.1 shows the format and content of the extended Update Bearer Request message formed by adding the modified bearer context IE in the Update Bearer Request message of the prior art. Table 1.2 shows the format and content of the modified bearer context IE.

**Table 1.1: Update Bearer Request message content change**

| The Update Bearer Request message is added with the following optional information element, which may be present at any position: | | | | |
|---|---|---|---|---|
| Information element | Class | Condition/Comment | Information element type | Instance |
| Deleted bearer context | Optional | This information element shall contain context relating to the deleted bearer. The information element having this type and instance value shall contain a bearer list. | Bearer context | |

**Table 1.2: deleted bearer context IE in the Update Bearer Request message**

| Byte 1 | | Bearer context information element type = 93 (Decimalism) | | |
|---|---|---|---|---|
| Bytes 2-3 | | Length = n | | |
| Byte 4 | | Reserve and instance field | | |
| Information element | Class | Condition/Comment | Information element type | Instance |
| Evolved packet system bearer number | Mandatory | | Evolved packet system bearer number | 0 |
| Reason value | Mandatory | This information element identifies a reason of success or failure to process the bearer | Reason value | 0 |

Table 2.1 shows the format and content of the extended Update Bearer Response message formed by adding the bearer context IE marked as deletion in the Update Bearer Response message of the prior art. Table 2.2 shows the format and content of this bearer context IE marked as deletion.

**Table 2.1: Update Bearer Response message content change**

| The Update Bearer Response message is added with the following optional information element, which may be present at any position: | | | | |
|---|---|---|---|---|
| Information element | Class | Condition/Comment | Information element type | Instance |
| Bearer context marked as deletion | Optional | Evolved packet system bearer corresponding to deleted bearer context in the Update Bearer Request message. This information element is optional, if the request message contains the deleted bearer context, then the information element is needed to be contained. With regard to each bearer, each information elements has the same type and instance value. | Bearer context | 1 |

**Table 2.2: bearer context IE marked as deletion in the Update Bearer Response**

| Byte 1 | Bearer context information element type = 93 (Decimalism) | | | |
|---|---|---|---|---|
| Bytes 2-3 | | Length = n | | |
| Byte 4 | | Reserve and instance field | | |
| Information element | Class | Condition/Comment | Information element type | Instance |
| Evolved packet system bearer number | Mandatory | | Evolved packet system bearer number | 0 |
| Reason value | Mandatory | This information element identifies a reason of success or failure to process the bearer | Reason value | 0 |

Table 3.1 shows the format and content of the extended Create Bearer Request message formed by adding the modified bearer context IE and the deleted bearer context IE in the Create Bearer Request message of the prior art. Table 3.2 shows the format and content of the modified bearer context IE. Table 3.3 shows the format and content of the deleted bearer context IE.

**Table 3.1: Create Bearer Request message content change**

| The Create Bearer Request message is added with the following information element, which may be present at any position: | | | | |
|---|---|---|---|---|
| Information element | Class | Condition/Comment | Information element type | Instance |
| Modified bearer context | Optional | This information element contains the bearer context of a QoS/service flow template needed to be modified. The information element having this type and instance value shall contain the bearer list. | Bearer context | 1 |
| Deleted bearer context | Optional | This information element contains the bearer context to be deleted. The information element having this type and instance value shall contain the bearer list. | Bearer context | 2 |

**Table 3.2: the modified bearer context IE in the Create Bearer Request**

| Byte 1 | Bearer context information element type = 93 (Decimalism) | | | |
|---|---|---|---|---|
| Bytes 2-3 | | Length = n | | |
| Byte 4 | | Reserve and instance field | | |
| Information element | Class | Condition/Comment | Information element type | Instance |
| Evolved packet system bearer number | Mandatory | | Evolved packet system bearer number | 0 |
| Service flow template | Condition | If an associated bearer is modified and the service flow template is changed, the information element is contained in S5/S8, S4/S11, and S2a/S2b interfaces. | Bearer service flow template | 0 |
| Bearer layer QoS | Condition | If QoS modification is requested, this information element is contained in the S5/S8, S4/S11, and S2a/S2b interfaces. | Bearer QoS | 0 |
| Protocol configuration option | Optional | Applicable mark: PPC (Prohibited Payload Compression): this mark is set at the S5/S8 and S4/S11 interfaces. vSRVCC indicator: this information element is contained at the S5/S8 interface, a basis is 3GPP specification 23.216. When the indicator is received from the S5/S8 interface, a serving gateway shall turn to the S11 interface. | Bearer mark | 0 |
| Protocol configuration option | Condition is optional | If it is valid, at the S5/S8 interface, a packet data gateway shall contain a protocol configuration option information element. If both of them exist, the information element of this bearer level is prior to that in a message body. If a serving gateway receives this information element, it shall be sent to an SGSN/MME at the S4/S11 interface. | Protocol configuration option | 0 |

**Table 3.3: deleted bearer context IE in the Create Bearer Request**

| Byte 1 | Bearer context information element type = 93 (Decimalism) | | | |
|---|---|---|---|---|
| Bytes 2-3 | | Length = n | | |
| Byte 4 | | Reserve and instance field | | |
| Information element | Class | Condition/Comment | Information element type | Instance |
| Evolved packet system bearer number | Mandatory | | Evolved packet system bearer number | 0 |
| Reason value | Mandatory | This information element identifies a reason of success or failure to process the bearer. | Reason value | 0 |

Table 4.1 shows format and content of the extended Create Bearer Response message formed by adding the modified bearer context IE and the bearer context IE marked as deletion in the Create Bearer Response message of the prior art. Table 4.2 shows the format and content of the modified bearer context IE. Table 4.3 shows the format and content of the format and content of marked as deletion.

**Table 4.1: Create Bearer Response message content change**

| The Create Bearer Response message is added with the following optional information element, which may be present at any position: | | | | |
|---|---|---|---|---|
| Information element | Class | Condition/Comment | Information element type | Instance |
| Modified bearer context | Optional | Evolved packet system bearer corresponding to the modified bearer context in the Create Bearer Request message. | Bearer context | 1 |
| | | This information element is optional, if the request message contains the modified bearer context, this information element is needed to be contained. The information element having this type and instance value shall contain a modified bearer list. | | |
| Bearer context marked as deletion | Optional | Evolved packet system bearer corresponding to the deleted bearer context in the Create Bearer Request message. | Bearer context | 2 |
| | | This information element is optional, if the request message contains the deleted bearer context, the information element is needed to be contained. With regard to each bearer, each information element has the same type and instance value. | | |

**Table 4.2: the modified bearer context IE in the Create Bearer Response message**

| | | | | |
|---|---|---|---|---|
| Byte 1 | Bearer context information element type = 93 (Decimalism) | | | |
| Bytes 2-3 | | Length = n | | |
| Byte 4 | | Reserve and instance field | | |

| Information element | Class | Condition/Comment | Information element type | Instance |
|---|---|---|---|---|
| Evolved packet system bearer number | Mandatory | | Evolved packet system bearer number | |
| Reason value | Mandatory | This information element identifies a reason of success or failure to process the bearer. | Reason value | |
| S4 user plane serving GPRS support node F-TEID | Condition | If a direct transmission tunnel is uncertain, this information element is contained in the S4 interface. | F-TEID | |
| S12 radio network controller F-TEID | Condition | When a direct transmission tunnel mark is set as 1, this information element is contained in the S4 interface. | F-TEID | |
| Protocol configuration option | Condition is optional | If this information is received from the UE, a mobility management entity/serving GPRS support node shall contain a protocol configuration option information element. If the serving gateway receives this information element, the serving gateway shall send it to a packet data network gateway at the S5/S8 interface. | Protocol configuration option | |
| | | If both of them exist, the information element of this bearer level is prior to that in a message body. | | |

**Table 4.3: the bearer context IE marked as deletion in the Create Bearer Response message**

| | | | | |
|---|---|---|---|---|
| Byte 1 | Bearer context information element type = 93 (Decimalism) | | | |
| Bytes 2-3 | | Length = n | | |
| Byte 4 | | Reserve and instance field | | |

| Information element | Class | Condition/Comment | Information element type | Instance |
|---|---|---|---|---|
| Evolved packet system bearer number | Mandatory | | Evolved packet system bearer number | 0 |
| Reason value | Mandatory | This information element identifies a reason of success or failure to process the bearer. | Reason value | 0 |

It should be noted that only several examples of the extended message content and format are listed here. According to these examples, those skilled in the art may be aware of message contents and formats of extended message obtained by performing message extension in other ways, which will not be detailed here.

In order to further explain the embodiment of the disclosure clearly, two preferred embodiments of the disclosure are provided below.

### <Preferred Embodiment 1 of the disclosure>

In the preferred Embodiment 1 of the disclosure, the gateway device is the PGW;
the trigger information is the IP-CAN Session Modification message from the PCRF;
the first type is modification, and the second type is deletion;
the first request signaling is an extended Update Bearer Request message, which is formed by adding the "deleted bearer context IE" in the existing Update Bearer Request message;
the first request signaling is sent to the SGW by the PGW, and is forwarded to the MME by the SGW;
the response signaling is sent to the SGW by the MME, and is forwarded to the PGW by the SGW;
with regard to the response signaling, if the MME does not support processing of the "deleted bearer context IE" in this extended Update Bearer Request message, then the response signaling is an existing Update Bearer Response message, which does not contain "the bearer context IE marked as deletion"; if the MME support processing of the "deleted bearer context IE" in the extended Update Bearer Request message, then the response signaling is an extended Update Bearer Response message, which is formed by adding the "bearer context IE marked as deletion" in the existing Update Bearer Response message.

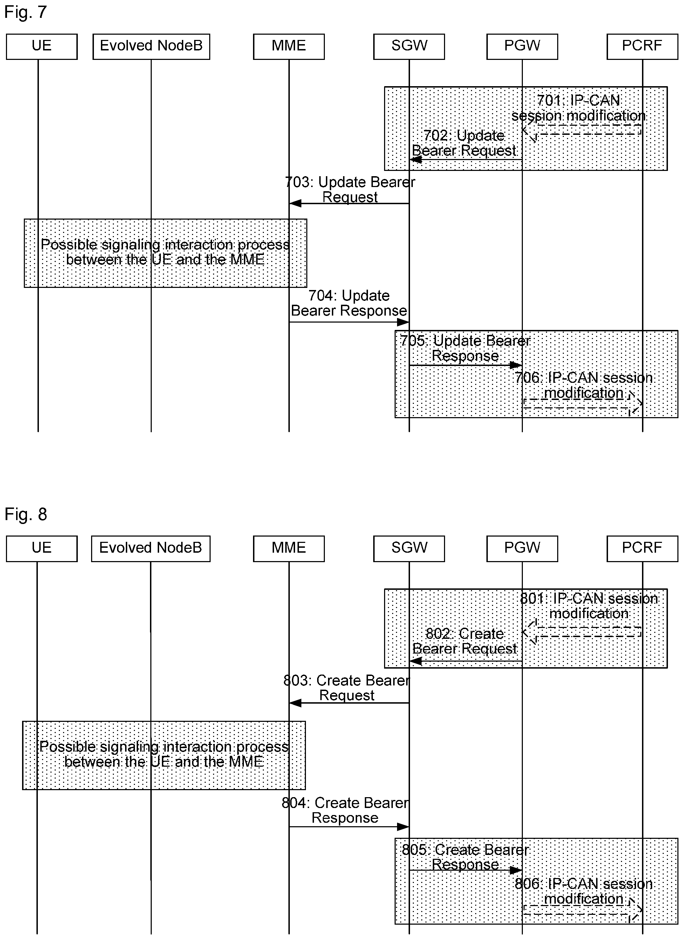

Fig. 7 illustrates a specific bearer modification and deletion process triggered by the PCRF through one message according to a preferred Embodiment 1 of the disclosure. With reference to Fig. 7, the process according to the preferred Embodiment 1 of the disclosure includes the following steps:
In Step 701, the PCRF triggers specific bearer modification, and sends, through an IP-CAN Session Modification message, a rule to the PGW for the PGW to determine that it is needed to perform a deletion operation on a part of the bearers;
In Step 702, the PGW analyzes the rule sent by the PCRF, and determines that it is needed to perform deletion on a part of the bearers; the PGW constructs an extended Update Bearer Request message, in which a deleted bearer context IE corresponding to the rule sent by the PCRF is included;
In Step 703, the SGW forwards the extended Update Bearer Request message to the MME;
In Step 704, the MME performs possible signaling interaction with the UE according to the extended Update Bearer Request message forwarded by the SGW, generates an extended Update Bearer Response message and sends the extended Update Bearer Response message to the SGW;
In Step 705, the SGW forwards the extended Update Bearer Response message from the MME to the PGW; after receiving the message, the PGW simultaneously processes a "bearer context IE" and a "bearer context IE marked as deletion" in the message, and after completion, all "deleted bearers" in the "bearer context IE marked as deletion" are normally deleted.

Step 706 is the same as an existing processing process of Step 12 in Figs.2 and 3 and Step 10 in Fig. 4, and therefore will not be detailed here.

In project implementation, considering that some MMEs may support the first request signaling and some MMEs may not support the first request signaling, the PGW may perform a judgment on the Update Bearer Response message from the SGW, and performs different processing according to a judgment result, so the "extended Update Bearer Response message" in Step 704 may be substituted with an "existing or extended Update Bearer Response message", and Step 705 may be substituted with the following content:
the SGW forwards the extended Update Bearer Response message from the MME to the PGW; after receiving the message, the PGW detects the message to judge whether or not a "bearer context IE marked as deletion" is contained in the message; if the judgment result is no, the PGW does not perform any operation on a "deleted bearer" in the "deleted bearer context IE" in Step 702, and continues to process a "bearer context IE" in the Update Bearer Response message; after completion, all "deleted bearers" in the "deleted bearer context IE" in Step 702 keep in original state; if the judgment result is yes, the PGW simultaneously processes the "bearer context IE" and the "bearer context IE marked as deletion" in the Update Bearer Response message from the SGW; after completion, all "deleted bearers" in the "bearer context IE marked as deletion" are normally deleted.

### <Preferred Embodiment 2 of the disclosure>

In the preferred Embodiment 2 of the disclosure, the gateway device is the PGW;
the trigger information is an IP-CAN Session Modification message from the PCRF;
the first type is creation, and the second type is modification;
the first request signaling is an extended Create Bearer Request message, which is formed by adding a "modified bearer context IE" in the existing Create Bearer Request message;
the first request signaling is sent to the SGW by the PGW, and is forwarded to the MME by the SGW;
the response signaling is sent to the SGW by the MME, and is forwarded to the PGW by the SGW;
with regard to the response signaling, if the MME does not support processing of the "modified bearer context IE" in the extended Create Bearer Request message, the response signaling is an existing Create Bearer Response message, which does not contain a "modified bearer context IE"; if the MME supports processing of the "modified bearer context IE" in the extended Create Bearer Request message, the response signaling is an extended Create Bearer Response message, which is formed by adding a "modified bearer context IE" in the existing Create Bearer Response message.

Fig. 8 illustrates a specific bearer creation and modification process triggered by the PCRF through one message according to a preferred Embodiment 2 of the disclosure. With reference to Fig. 8, the process according to the preferred Embodiment 2 of the disclosure includes the following steps:
In Step 801, the PCRF triggers specific bearer creation, and sends, through an IP-CAN Session Modification message, a rule to the PGW for the PGW to determine that it is needed to perform a modification operation on a part of the bearers;
In Step 802, the PGW analyzes the rule sent by the PCRF, and determines that it is needed to perform a modification operation on a part of the bearers; the PGW constructs an extended Create Bearer Request message, in which a "modified bearer context IE" corresponding to the rule sent by the PCRF is included;
In Step 803, the SGW forwards the extended Create Bearer Request message to the MME;
In Step 804, the MME performs possible signaling interaction with the UE according to the extended Create Bearer Request message forwarded by the SGW, generates an extended Create Bearer Response message and sends the extended Create Bearer Response message to the SGW;
In Step 805, the SGW forwards the extended Create Bearer Response message from the MME to the PGW; after receiving the message, the PGW processes a "bearer context IE" and a "modified bearer context IE" in the message, and after completion, all "modified bearers" in the "modified bearer context IE" are modified.

Step 806 is the same as the processing processes of Step 12 in Figs.2 and 3, Step 10 in Fig. 4, and Step 706, and therefore will not be detailed here.

In project implementation, considering some MMEs may support the first request signaling and some MMEs may not support the first request signaling, the PGW may perform a judgment on the Create Bearer Response message from the SGW, and performs different processing according to the judgment result, so the "extended Create Bearer Response message" in Step 804 may be substituted with an "existing or extended Create Bearer Response message", and Step 805 may be substituted with the following content:
the SGW forwards the extended Create Bearer Response message from the MME to the PGW; after receiving the message, the PGW detects the message to judge whether or not a "modified bearer context IE" is contained in the message; if the judgment result is no, the PGW does not perform any operation on a "modified bearer" in the "modified bearer context IE" in Step 802, and continues to process a "bearer context IE" in the Create Bearer Response message; after completion, all "modified bearers" in the "modified bearer context IE" in Step 802 keep in original state; if the judgment result is yes, the PGW simultaneously processes the "bearer context IE" and the "modified bearer context IE" in the Create Bearer Response message from the SGW; after completion, all "modified bearers" in the "modified bearer context IE" are modified.

### <Preferred Embodiment 3 of the disclosure>

In the preferred Embodiment 3 of the disclosure, the gateway device is the PGW;
the trigger information is an IP-CAN Session Modification message from the PCRF;
the first type is creation, the second type is modification, and the third type is deletion;
the first request signaling is an extended Create Bearer Request message, which is formed by adding a "modified bearer context IE" and a "deleted bearer context IE" in the existing Create Bearer Request message;
the first request signaling is sent to the SGW by the PGW, and is forwarded to the MME by the SGW;
the response signaling is sent to the SGW by the MME, and is forwarded to the PGW by the SGW;
with regard to the response signaling, if the MME does not support processing of the "modified bearer context IE" and the "deleted bearer context IE" in the extended Create Bearer Request message, the response signaling is an existing Create Bearer Response message, which does not contain a "modified bearer context IE" and a "bearer context IE marked as deletion"; if the MME supports processing of the "modified bearer context IE" and the "deleted bearer context IE" in the extended Create Bearer Request message, the response signaling is an extended Create Bearer Response message, which is formed by adding a "modified bearer context IE" and a "bearer context IE marked as deletion" in the existing Create Bearer Response message.

The specific bearer creation, modification and deletion process of the preferred Embodiment 3 of the disclosure includes the following steps:
In Step 901, the PCRF triggers specific bearer creation, and sends, through an IP-CAN Session Modification message, a rule to the PGW for the PGW to determine that it is needed to perform a modification operation on a part of the bearers and to perform a deletion operation on a part of the bearers;
In Step 902, the PGW analyzes the rule sent by the PCRF, and determines that it is needed to perform a modification operation on a part of the bearers and perform a deletion operation on a part of the bearers; the PGW constructs an extended Create Bearer Request message, in which a "modified bearer context IE" and a "deleted bearer context IE" corresponding to the rule sent by the PCRF is included;
In Step 903, the SGW forwards the extended Create Bearer Request message to the MME;
In Step 904, the MME performs possible signaling interaction with the UE according to the extended Create Bearer Request message forwarded by the SGW, generates an extended Create Bearer Response message and sends the extended Create Bearer Response message to the SGW;
In Step 905, the SGW forwards the extended Create Bearer Response message from the MME to the PGW; after receiving the message, the PGW processes a "bearer context IE", a "modified bearer context IE" and a "bearer context IE marked as deletion" in the message, and after completion, all "deleted bearers" in the "bearer context IE marked as deletion" are deleted, and all "modified bearers" in the" modified bearer context IE" are modified.

In project implementation, considering that some MMEs may support the first request signaling and some MMEs may not support the first request signaling, the PGW may perform a judgment on the Create Bearer Response message from the SGW, and performs different processing according to the judgment result, so the "extended Create Bearer Response message" in Step 904 may be substituted with an "existing or extended Create Bearer Response message", and Step 905 may be substituted with the following contents:
the SGW forwards the extended Create Bearer Response message from the MME to the PGW; after receiving the message, the PGW detects the message to judge whether or not the "modified bearer context IE" and the "bearer context IE marked as deletion" are contained in the message; if the judgment result is no, the PGW does not perform any operation on a "modified bearer" in the "modified bearer context IE" and a "deleted bearer" in the "deleted bearer context IE" in Step 902, and continues to process a "bearer context IE" in the Create Bearer Response message; after completion, all "modified bearers" in the "modified bearer context IE" and all "deleted bearers" in the "deleted bearer content IE" in Step 902 keep in original state; if the judgment result is yes, the PGW simultaneously processes the "bearer context IE", the "modified bearer context IE" and the "bearer context IE marked as deletion" in the Create Bearer Response message from the SGW; after completion, all "deleted bearers" in the "bearer context IE marked as deletion" are deleted, and all "modified bearers" in the "modified bearer context IE" are modified.

An embodiment of the disclosure further provides a signaling initiation apparatus, which includes:
a determination module configured to determine trigger information; the trigger information is related to at least one first bearer and at least one second bearer;
a judgment module configured to judge, according to the trigger information, whether to initiate at least two requests including a first request for performing a first type of processing on the at least one first bearer and a second request for performing a second type of processing on the at least one second bearer, and acquire a first judgment result; and
an initiation module configured to initiate the at least two requests through one first request signaling when the first judgment result is yes.

The device may be used in a gateway device.

It can be seen that different types of bearer processing requests are initiated through one first request signaling, so that the signaling processing load of the gateway device is reduced.

The determination module may include:
a first receiving module configured to receive the trigger information from a PCRF or a UE.

The first type may be creation, modification, or deletion. The second type may be creation, modification, or deletion, and the second type is different from the first type.

The first request signaling may be an extension signaling after extending a second request signaling which supports initiation of the first request.

Further, the device may further include:
a second receiving module configured to receive a response signaling for the first request signaling; the response signaling includes first response information for the first request;
a judgment unit configured to judge whether or not the response signal includes second response information for the second request, and acquire a second judgment result;
a first processing unit configured to process the first response information according to the first type and process the second response information according to the second type, when the second judgment result is yes; and
a second processing unit configured to process the first response information according to the first type, when the second judgment result is no.

Each module described above may be implemented through a Central Processing Unit (CPU), a Digital Signal Processor (DSP) or a Field-Programmable Gate Array (FPGA) in a network management device.

An embodiment of the disclosure further provides a gateway device, which includes the signaling initiation apparatus described above. For example the gateway device is the PGW.

All those described above are only implementation ways of the embodiment of the disclosure, and it should be noted that, with regard to those skilled in the art, some improvements and modifications may be made without departing from a principle of the embodiment of the disclosure, and these improvements and modifications shall also be included in the scope of protection of the embodiment of the disclosure.

## Claims

1. A signaling initiation method for a gateway device, comprising:
Determining (601) trigger information; wherein, the trigger information is related to at least one first bearer and at least one second bearer;
Judging (602), according to the trigger information, whether to initiate at least two requests comprising a first request for performing a first type of processing on the at least one first bearer and a second request for performing a second type of processing on the at least one second bearer, and acquiring a first judgment result; and
**characterized in that**, Initiating (603) the at least two requests through a first request signaling, when the first judgment result is yes;
wherein the first type is creation, modification, or deletion; the second type is creation, modification, or deletion, and the second type is different from the first type.

2. The method according to claim 1, wherein the determining the trigger information comprises:
receiving the trigger information from a Policy and Charging Rule Function, PCRF, entity or User Equipment, UE,.

3. The method according to claim 1, wherein the at least two requests further comprises a third request for performing a third type of processing on at least one third bearer.

4. The method according to claim 3, wherein the first type is creation, the second type is modification and the third type is deletion.

5. The method according to claim 1, wherein the first request signaling is an extension signaling after extending a second request signaling which supports initiation of the first request.

6. The method according to claim 5, further comprising:
receiving a response signaling for the first request signaling; wherein the response signaling comprises first response information for the first request;
judging whether or not the response signal comprises second response information for the second request, and acquiring a second judgment result;
processing the first response information according to the first type and processing the second response information according to the second type, when the second judgment result is yes; and
processing the first response information according to the first type, when the second judgment result is no.

7. A signaling initiation apparatus used in a getaway device, comprising:
a determination module, configured to determine (601) trigger information; wherein the trigger information is related to at least one first bearer and at least one second bearer;
a judgment module, configured to judge (602), according to the trigger information, whether to initiate at least two requests comprising a first request for performing a first type of processing on the at least one first bearer and a second request for performing a second type of processing on the at least one second bearer, and acquire a first judgment result; and
**characterized in that**, an initiation module, configured to initiate (603) the at least two requests through one first request signaling when the first judgment result is yes;
wherein the first type is creation, modification, or deletion; the second type is creation, modification, or deletion, and the second type is different from the first type.

8. The apparatus according to claim 7, wherein the determination module comprises:
a first receiving module, configured to receive the trigger information from a Policy and Charging Rule Function, PCRF, entity or User Equipment, UE,.

9. The apparatus according to claim 7, wherein the first request signaling is an extension signaling after extending a second request signaling which supports initiation of the first request.

10. The apparatus according to claim 9, further comprises:
a second receiving module, configured to receive a response signaling for the first request signaling; wherein the response signaling comprises first response information for the first request;
a judgment unit, configured to judge whether or not the response signal comprises second response information for the second request, and acquiring a second judgment result;
a first processing unit, configured to process the first response information according to the first type and process the second response information according to the second type, when the second judgment result is yes; and
a second processing unit, configured to process the first response information according to the first type, when the second judgment result is no.

11. A gateway device, comprising the signaling initiation apparatus according to any one of claims 7-10.

## Patentansprüche

1. Signalisierungsinitüerungsverfahren für eine Gatewayvorrichtung, das Folgendes umfasst:
Bestimmen (601) von Auslöseinformationen; wobei die Auslöseinformationen auf mindestens einen ersten Träger und mindestens einen zweiten Träger bezogen sind;
Beurteilen (602) gemäß den Auslöseinformationen, ob mindestens zwei Anforderungen initiiert werden sollen, die eine erste Anforderung zum Durchführen eines ersten Typs von Verarbeitung auf dem mindestens einen ersten Träger und eine zweite Anforderung zum Durchführen eines zweiten Typs von Verarbeitung auf dem mindestens einen zweiten Träger umfassen, und Abrufen eines ersten Beurteilungsergebnisses und
**dadurch gekennzeichnet, dass** Initiieren (603) der mindestens zwei Anforderungen durch eine erste Anforderungssignalisierung, wenn das erste Beurteilungsergebnis ja ist;
wobei der erste Typ Erstellung, Modifikation oder Löschung ist; der zweite Typ Erstellung, Modifikation oder Löschung ist und der zweite Typ sich vom ersten Typ unterscheidet.

2. Verfahren nach Anspruch 1, wobei das Bestimmen der Auslöseinformationen Folgendes umfasst:
Empfangen der Auslöseinformationen von einer PCRF-Entität (Policy and Charging Rule Function - Funktion für Richtlinien- und Abrechnungsregeln) oder einer Teilnehmereinrichtung, UE.

3. Verfahren nach Anspruch 1, wobei die mindestens zwei Anforderungen ferner eine dritte Anforderung zum Durchführen eines dritten Typs von Verarbeitung auf mindestens einem dritten Träger umfassen.

4. Verfahren nach Anspruch 3, wobei der erste Typ Erstellung, der zweite Typ Modifikation und der dritte Typ Löschung ist.

5. Verfahren nach Anspruch 1, wobei die erste Anforderungssignalisierung eine Erweiterungssignalisierung nach Erweitern einer zweiten Anforderungssignalisierung ist, die die Initiierung der ersten Anforderung unterstützt.

6. Verfahren nach Anspruch 5, das ferner Folgendes umfasst:
Empfangen einer Antwortsignalisierung für die erste Anforderungssignalisierung; wobei die Antwortsignalisierung erste Antwortinformationen für die erste Anforderung umfasst;
Beurteilen, ob das Antwortsignal zweite Antwortinformationen für die zweite Anforderung umfasst oder nicht, und Abrufen eines zweiten Beurteilungsergebnisses;
Verarbeiten der ersten Antwortinformationen gemäß dem ersten Typ und Verarbeiten der zweiten Antwortinformationen gemäß dem zweiten Typ, wenn das zweite Beurteilungsergebnis ja ist; und
Verarbeiten der ersten Antwortinformationen gemäß dem ersten Typ, wenn das zweite Beurteilungsergebnis nein ist.

7. Signalisierungsinitüerungseinrichtung, die in einer Gatewayvorrichtung verwendet wird und Folgendes umfasst:
ein Bestimmungsmodul, das dazu ausgelegt ist, Auslöseinformationen zu bestimmen (601); wobei die Auslöseinformationen auf mindestens einen ersten Träger und mindestens einen zweiten Träger bezogen sind;
ein Beurteilungsmodul, das dazu ausgelegt ist, gemäß den Auslöseinformationen zu beurteilen (602), ob mindestens zwei Anforderungen initiiert werden sollen, die eine erste Anforderung zum Durchführen eines ersten Typs von Verarbeitung auf dem mindestens einen ersten Träger und eine zweite Anforderung zum Durchführen eines zweiten Typs von Verarbeitung auf dem mindestens einen zweiten Träger umfassen, und ein erstes Beurteilungsergebnisses abzurufen; und
**dadurch gekennzeichnet, dass** ein Initüerungsmodul, das dazu ausgelegt ist, die mindestens zwei Anforderungen durch eine erste Anforderungssignalisierung zu initiieren (603), wenn das erste Beurteilungsergebnis ja ist;
wobei der erste Typ Erstellung, Modifikation oder Löschung ist; der zweite Typ Erstellung, Modifikation oder Löschung ist und der zweite Typ sich vom ersten Typ unterscheidet.

8. Einrichtung nach Anspruch 7, wobei das Bestimmungsmodul Folgendes umfasst:
ein erstes Empfangsmodul, das dazu ausgelegt ist, die Auslöseinformationen von einer PCRF-Entität (Policy and Charging Rule Function - Funktion für Richtlinien- und Abrechnungsregeln) oder einer Teilnehmereinrichtung, UE, zu empfangen.

9. Einrichtung nach Anspruch 7, wobei die erste Anforderungssignalisierung eine Erweiterungssignalisierung nach Erweitern einer zweiten Anforderungssignalisierung ist, die die Initiierung der ersten Anforderung unterstützt.

10. Einrichtung nach Anspruch 9, die ferner Folgendes umfasst:
ein zweites Empfangsmodul, das dazu ausgelegt ist, eine Antwortsignalisierung für die erste Anforderungssignalisierung zu empfangen; wobei die Antwortsignalisierung erste Antwortinformationen für die erste Anforderung umfasst;
eine Beurteilungseinheit, die dazu ausgelegt ist zu beurteilen, ob das Antwortsignal zweite Antwortinformationen für die zweite Anforderung umfasst oder nicht, und Abrufen eines zweiten Beurteilungsergebnisses;
eine erste Verarbeitungseinheit, die dazu ausgelegt ist, die ersten Antwortinformationen gemäß dem ersten Typ zu verarbeiten und die zweiten Antwortinformationen gemäß dem zweiten Typ zu verarbeiten, wenn das zweite Beurteilungsergebnis ja ist; und
eine zweite Verarbeitungseinheit, die dazu ausgelegt ist, die ersten Antwortinformationen gemäß dem ersten Typ zu verarbeiten, wenn das zweite Beurteilungsergebnis nein ist.

11. Gatewayvorrichtung, die die Signalisierungsinitüerungseinrichtung nach einem der Ansprüche 7-10 umfasst.

## Revendications

1. Procédé d'initiation de signalisation pour un dispositif passerelle, comprenant :
la détermination (601) d'informations de déclenchement ; les informations de déclenchement étant liées à au moins un premier support et au moins un deuxième support ;
l'estimation (602), conformément aux informations de déclenchement, de la nécessité d'initier au moins deux demandes comprenant une première demande de réalisation d'un premier type de traitement sur l'au moins un premier support et une deuxième demande de réalisation d'un deuxième type de traitement sur l'au moins un deuxième support ; et l'acquisition d'un premier résultat d'estimation ; et
**caractérisé en ce que**, l'initiation (603) des au moins deux demandes par le biais d'une signalisation de première demande, lorsque le premier résultat est oui ;
le premier type étant la création, la modification ou la suppression ; le deuxième type étant la création, la modification ou la suppression, et le deuxième type étant différent du premier type.

2. Procédé selon la revendication 1, dans lequel la détermination des informations de déclenchement comprend :
la réception des informations de déclenchement de la part d'une entité fonctionnelle de politique et de règle de facturation, PCRF ou d'un équipement utilisateur, UE.

3. Procédé selon la revendication 1, dans lequel les au moins deux demandes comprennent en outre une troisième demande de réalisation d'un troisième type de traitement sur au moins un troisième support.

4. Procédé selon la revendication 3, dans lequel le premier type est la création, le deuxième type est la modification et le troisième type est la suppression.

5. Procédé selon la revendication 1, dans lequel la signalisation de première demande est une signalisation d'extension après l'extension d'une signalisation de deuxième demande qui soutient l'initiation de la première demande.

6. Procédé selon la revendication 5, comprenant en outre :
la réception d'une signalisation de réponse pour la signalisation de première demande ; la signalisation de réponse comprenant des informations de première réponse pour la première demande ;
l'estimation de savoir si la signalisation de réponse comprend, ou non, des informations de deuxième réponse pour la deuxième demande, et l'acquisition d'un deuxième résultat d'estimation ;
le traitement des informations de première réponse conformément au premier type et le traitement des informations de deuxième réponse conformément au deuxième type, lorsque le deuxième résultat d'estimation est oui ; et
le traitement des informations de première réponse conformément au premier type, lorsque le deuxième résultat d'estimation est non.

7. Appareil d'initiation de signalisation utilisé dans un dispositif passerelle, comprenant :
un module de détermination, conçu pour déterminer (601) des informations de déclenchement ; les informations de déclenchement étant liées à au moins un premier support et à au moins un deuxième support ;
un module d'estimation, conçu pour estimer (602), conformément aux informations de déclenchement, si l'on doit, ou non, initier au moins deux demandes comprenant une première demande de réalisation d'un premier type de traitement sur l'au moins un premier support et une deuxième demande de réalisation d'un deuxième type de traitement de l'au moins un deuxième support, et si l'on doit acquérir, ou non, un premier résultat d'estimation ; et
**caractérisé en ce que**, un module d'initiation, conçu pour initier (603) les au moins deux demandes par le biais d'une signalisation de première demande lorsque le premier résultat d'estimation est oui ;
le premier type étant la création, la modification ou la suppression ; le deuxième type étant la création, la modification ou la suppression, et le deuxième type étant différent du premier type.

8. Appareil selon la revendication 7, dans lequel le module de détermination comprend :
un premier module de réception, conçu pour recevoir les informations de déclenchement de la part d'une entité fonctionnelle de politique et de règle de facturation, PCRF ou d'un équipement utilisateur, UE.

9. Appareil selon la revendication 7, dans lequel la signalisation de première demande est une signalisation d'extension après l'extension d'une signalisation de deuxième demande qui soutient l'initiation de la première demande.

10. Appareil selon la revendication 9, comprenant en outre :
un deuxième module de réception, conçu pour recevoir une signalisation de réponse pour la signalisation de première demande ; la signalisation de réponse comprenant des informations de première réponse pour la première demande ;
une unité d'estimation, conçue pour estimer si le signal de réponse comprend, ou non, des informations de deuxième réponse pour la deuxième demande et l'acquisition d'un deuxième résultat d'estimation ;
une première unité de traitement, conçue pour traiter les informations de première réponse conformément au premier type et traiter les informations de deuxième réponse conformément au deuxième type, lorsque le deuxième résultat d'estimation est oui ; et
une deuxième unité de traitement, conçue pour traiter les informations de première réponse conformément au premier type, lorsque le deuxième résultat d'estimation est non.

11. Dispositif de passerelle, comprenant l'appareil d'initiation de signalisation selon l'une quelconque des revendications 7 à 10.
